Europäisches Patentamt

European Patent Office

Office européen des brevets

(19)

(11) Publication number: **0 356 343**
A1

## (12) EUROPEAN PATENT APPLICATION

(21) Application number: 89420261.3

(22) Date of filing: 20.07.89

(51) Int. Cl.5: **C 08 G 63/18**
C 08 K 3/24, C 08 K 5/09,
C 08 L 67/02, C 08 J 5/18

(30) Priority: 25.07.88 US 224022

(43) Date of publication of application:
28.02.90 Bulletin 90/09

(84) Designated Contracting States: ES GR

(71) Applicant: EASTMAN KODAK COMPANY (a New Jersey corporation)
343 State Street
Rochester New York 14650 (US)

(72) Inventor: Sublett, Bobby Jones c/o EASTMAN KODAK COMPANY
Patent Department 343 State Street
Rochester New York 14650 (US)

Overton, James Ray c/o EASTMAN KODAK COMPANY
Patent Department 343 State Street
Rochester New York 14650 (US)

(74) Representative: Parent, Yves et al
Kodak-Pathé Département Brevets et Licences Centre de Recherches et de Technologie Zone Industrielle
F-71102 Chalon-sur-Saône Cédex (FR)

(54) Copolymers of poly(ethylene terephthalate) having rapid crystallization rate from the glassy state.

(57) Disclosed are copolyesters having repeating units mainly from terephthalic acid and ethylene glycol containing small quantitites of alkali or alkaline earth metal compounds which improve crystallization rates from the glassy state. The method of producing such copolyesters and thermoformed articles made therefrom are also disclosed.

EP 0 356 343 A1

## Description

## COPOLYMERS OF POLY(ETHYLENE TEREPHTHALATE) HAVING RAPID CRYSTALLIZATION RATE FROM THE GLASSY STATE

Technical Field

This invention relates to copolyesters of poly(ethylene terephthalate), sometimes referred to herein as PET, having rapid crystallization rates from the glassy state and improved impact resistance. Such copolyesters are suitable for producing sheet material which is thermoformable and heat-settable to form thin-walled articles such as food trays. The invention further relates to the process for producing such copolyesters using an alkali or alkaline earth metal salt in low concentration in the copolymerization of terephthalic acid (or ester thereof such as dimethyl terephthalate) and ethylene glycol with coacids or coglycols.

Background of the Invention

Poly(ethylene terephthalate) is known to be useful for the production of fibers, textiles, films and with certain modifications, molding plastics. The widespread popularity of microwave ovens for home use has initiated interest in polyester containers for food which can be used in microwave or conventional ovens and which can withstand oven temperatures near 200°C. Poly(ethylene terephthalate) is a material which, if processed properly, has the desirable properties for this end use. A preferred process for producing thin wall trays, dishes, and other articles is thermoforming. The thermoforming process consists of preheating a preformed amorphous polyester sheet to a temperature sufficient to allow deformation of the sheet. The sheet is then shaped into an article via a mold by such means as vacuum assist, air pressure, and matched molds.

By the term "glassy state" we mean an amorphous state at temperatures which result in a non-molten condition, i.e., temperatures at which the material is a solid but capable of being thermoformed.

The thermoforming of unmodified poly(ethylene terephthalate) from sheeting and crystallization in a heated mold is known. The use of unmodified poly(ethylene terephthalate) is objectionable because of its slow crystallization rate, sticking in the mold, distortion of the molded article because of insufficient crystallinity, and molding times too long to be useful on commercial equipment because of its slow crystallization rate.

There are known processes for modifying high molecular weight poly(ethylene terephthalate) to provide fast cycle times, fast crystallization rates, and improved impact resistance. U.S. Patent No. 3,960,807 teaches a process for thermoforming articles from a composition having three essential components, i.e., a crystallizable polyester, a crack stopping agent (preferably a polyolefin), and a nucleating agent. U.S. Patent No. 4,463,121 teaches that nucleating agents taught in U.S. Patent No. 3,960,807 are completely unnecessary and that poly(ethylene terephthalate) can be modified with a small amount of polyolefin and a heat stabilizer to produce polyesters which exhibit improved impact resistance and high temperature dimensional stability. U.S. Patent No. 4,572,852 describes a thermoforming process for ultrahigh molecular weight poly(ethylene terephthalate) with intrinsic viscosities of 0.65 to 1.2.

Other articles and patents describe nucleating agents for poly(ethylene terephthalate), most of which are concerned with obtaining rapid crystallization from the molten state, or crystallization on cooling from the melt. U.S. Patent No. 4,705,844 speaks to using alkaline earth and alkali metals at high concentration to prepare highly nucleated polyesters which are then blended with nonnucleated polyesters to provide fast crystallizing polymers which crystallize rapidly from the melt and are useful in molding compositions which enable the polymers to crystallize in low temperature molds, as opposed to the present invention which concerns crystallization from the glassy state.

U.S. Patent Nos. 4,344,874; 4,506,050; 4,305,864; 3,368,995; and G.B. Application No. 2,015,013 are of interest.

We are aware of poly(ethylene terephthalate) homopolymers which crystallize rapidly from the glassy state. However, in dealing with copolymers, except for the present invention, even very small quantities of modifying acids or glycols greatly slow the crystallization rate from the glassy state. Crystallization kinetics of copolymers are vastly different from those of homopolymers. It is, therefore, unexpected that the same crystallization aids that are used for homopolymers also function well as crystallization aids for copolymers. Moreover, copolymers inherently have better impact strength than homopolymers, and with the use of the crystallization aids according to this invention, this impact strength is retained.

The modifications reported in the literature for poly(ethylene terephthalate) to render it useful for thermoforming, especially for enhancing crystallization rate, are predicated on blending additives into poly(ethylene terephthalate) polymer and extruding sheets to disperse additives uniformity throughout the polymer to form a homogeneous mix. We have surprisingly and unexpectedly found that crystallization rates sufficient for fast cycle times during thermoforming and providing improved impact resistance can be accomplished by the addition of low concentrations of alkali or alkaline earth metal salts to the reaction mixture prior to polycondensation. Those salts are believed to be capable of forming terephthalic acid salts in situ when included in the reaction mix for preparing poly(ethylene terephthalate). Adding the terephthalate salts to an already-formed copolymer would cause breakdown of the polymer, resulting in an undesirable decrease in molecular weight and inherent viscosity. Preferred salts include potassium, sodium, lithium, and magnesium carbonates and acetates. The acid portion of the salt must be volatile enough so when liberated as the acid in the reaction mix, it does not become a chain terminator. It is known in the literature that alkali metal salts of long chain fatty acids (stearic and oleic) are crystallizing from the melt and are blended and coextruded with the polymer (U.S. Patent No. 3,516,957). However, these materials do not enhance crystallization from the glassy state which is necessary for thermoforming from amorphous sheet. Also, if these materials are added to the reaction mix, the reaction which takes place in the mix causes the long chain acids to become polymerization terminators since they are monofunctional and do not totally volatilize from the mix under polycondensation conditions. These materials no longer enhance crystallization from the melt when added to the reaction mix. The metal salts used in the present invention are added to the initial reaction mix and are found to enhance crystallization from the amorphous state. Fillers such as titanium dioxide or talc may be icluded to improve impact strength stiffness and opacity. Fast crystallization rates are obtained at low concentrations of the metal and do not appear to be enhanced further at high concentrations.

Description of the Invention

According to one aspect of the present invention, there is provided a method of producing a copolyester having a rapid rate of crystallization from the glassy state which comprises the steps of

A) preparing a mixture comprising (1) terephthalic acid or an ester thereof, (2) ethylene glycol, (3) 0.5 to 10 mol % of at least one compound selected from dicarboxylic acids other than terephthalic having 2-12 carbon atoms and aliphatic glycols other than ethylene glycol having 2-10 carbon atoms and (4) an alkali or alkaline earth metal salt of a mineral acid or monofunctional aliphatic acid of 1 to 5 carbon atoms,

B) subjecting the mixture prepared in step A) to polymerization conditions, and

C) recovering a product comprising a copolyester having dispersed therein a compound of the metal of said metal salt in sufficient amount to provide 25-5,000 ppm of the elemental metal portion of said compound in the copolyester.

According to another aspect of this invention, there is provided a sheet of material capable of being thermoformed into a thin-walled article having a crystallinity of at least 20% immediately after thermoforming, said sheet having a crystallization half-time at 130°C of less than 1 minute from the glassy state, said sheet comprising a copolymer wherein a major portion of its repeat units are from terephthalic acid and ethylene glycol, said copolyester having an I.V. of 0.60-1.0, and a crystallization aid dispersed therein comprising an alkali or alkaline earth metal compound in sufficient amount to provide 25-5,000 ppm of the elemental metal portion of said compound in the copolyester.

Still further, according to the present invention there is provided a shaped, thin-walled, article thermoformed from the sheet described above.

Concerning the terminology used in this application, the alkali or alkaline earth metal compound used in the reaction mix is a salt and is referred to as such. However, it is speculated that this salt may undergo a reaction during the polymerization reaction. For example, applicants believe that the metal salt may liberate the volatile acid moiety and react with the terephthalic acid to form a metal terephthalate, e.g., sodium carbonate may release carbonic acid and form sodium terephthalate. Therefore, in instances where the copolyester is referred to the crystallization aid is called a metal "compound," as applicants do not wish to be limited to the particular compound.

By the term "copolymers of PET" we mean copolymers containing at least 90 mol % (based on 100 mol % of dicarboxylic acid component) of repeating units from terephthalic acid and at least 90 mol % (based on 100 mol % of glycol component) of repeating units from ethylene glycol. Such copolyesters also contain repeating units from 0.5 to 10 mol % of another dicarboxylic acid and/or another glycol (other than the normal amount of diethylene glycol, 1.5 mol %, which is normally present in copolymer of PET with the total modification being no greater than 10 mol %). Of course, esters of terephthalic acid (e.g., dialkyl esters such as dimethyl or diethyl terephthalate) can be used in place of the acid.

The modifying dicarboxylic acid can be any aliphatic, cycloaliphatic, or aromatic acid having 2 to 12 carbon atoms. Examples of such dicarboxylic acids include oxalic; malonic; dimethylmalonic; succinic; glutaric; adipic; trimethyladipic; pimelic; 2,2-dimethylglutaric; azelaic, sebacic, fumaric, maleic; itaconic; 1,3-cyclopentanedicarboxylic; 1,2-cyclohexanedicarboxylic; 1,3-cyclohexanedicarboxylic, 1,4-cyclohexanedicarboxylic; phthalic; isophthalic; 2,5-norbornanedicarboxylic; 1,4-naphthalic; diphenic; 4,4'-oxydibenzoic; diglycolic; thiodipropionic; 4,4'-sulfonyldibenzoic; and 2,5-naphthalenedicarboxylic acids. Although acids are specified here and in the claims, it should be understood that conventional polyester-forming derivatives thereof can also be used, e.g., conventional succinates, isophthalates, etc.

The modifying glycols can be any aliphatic glycols containing 2 to 10 carbon atoms. Examples of these glycols include propylene glycol; 1,3-propanediol; 2,4-dimethyl-2-ethyl-hexane-1,3-diol; 2,2-dimethyl-1,3-propanediol; 2-ethyl-2-butyl-1,3-propanediol; 2-ethyl-2-isobutyl-1,3-propanediol; 1,3-butanediol; 1,4-butanediol; 1,5-pentanediol; 1,6-hexanediol; 2,2,4-trimethyl-1,6-hexanediol; 1,2-cyclohexanedimethanol; 1,3-cyclohexanedimethanol; 1,4-cyclohexanedimethanol; 2,2,4,4-tetramethyl- 1,3-cyclobutanediol; p-xylylenediol; diethylene glycol and triethylene glycol. Copolymers may be prepared from two or more of the above glycols and acids.

The crystallization aids are described as alkali and alkaline earth metal salts of mineral acids or organic monofunctional aliphatic acids of 1 to 5 carbon atoms. Such acids are volatile, e.g., have boiling points below 250°C. Preferred metals are sodium, potassium, lithium and magnesium. Preferred acids include carbonic, acetic, oxalic, tartaric and pivalic. Mineral acids such as sulfuric, phosphoric, phosphorus, etc. can also be

3

used. The salts and their preparation are well known in the art and many are commercially available. The metal salts are present in the reaction mix at concentrations sufficient to result in the copolyester produced therefrom having dispersed therein a compound of the metal of said metal salt in sufficient amount to provide 25-5,000 ppm, preferably 50-500 ppm, of the elemental metal portion of said compound in the copolyester.

Concentrations of the metal salt to be used in the reaction mix to result in 25-5,000 ppm metal, by weight, in the polymer can easily be calculated by those skilled in the art. For example, the number parts of the compound to be used in the reaction mix to give a certain number parts of the metal based on polymer weight is derived from the following calculation:

$$\text{ppm compound} = \text{ppm metal} \times \frac{\text{molecular wt. of compound}}{\text{molecular wt. of metal}}$$

It is preferred to use the minimum amount of metal salt which will accomplish the fast crystallization rate. Although quantities up to 3,000 ppm metal in the polymer can be used, it is preferred to use no more than 2,000 ppm, and most desirably, less than 500 ppm. Concentrations above 2,000 ppm tend to encourage crystallization during extrusion of the sheet from the molten polymer, which is undesirable.

Conventional additives such as stabilizers, plasticizers, colorants, etc., may be used.

The polyesters are prepared in conventional manner. Typically, poly(ethylene terephthalate) copolymers are prepared from dimethyl terephthalate, ethylene glycol and a coacid and/or coglycol using conventional transesterification and polycondensation catalysts and phosphorus compounds as stabilizers. The polymers are prepared by melt phase polymerization to I.V.'s of 0.62 to 0.68 and then ground and solid state polymerized to I.V.'s of 0.90 to 0.95. The polymers are then extruded into sheets approximately 25 mils in thickness, and the sheet I.V.'s ranges from 0.80 to 0.89. Thermoforming of the sheets is accomplished by preheating the sheets to a temperature which allows deformation in a mold 135°-150°C). This preheated sheet is then formed in a mold which is at a temperature of 170°C using conventional thermoforming techniques, with vacuum or pressure assistance if desired.

Crystallization half-times are determined by Differential Scanning Calorimeter (DSC) technique isothermally at 130°C. This technique has been found to be useful for determining mold cycle time when articles are formed from sheets on commerical thermoforming equipment. It has been determined that when crystallization half-times at 130°C are less than 1 minute, very fast mold cycle times can be achieved on thermoforming equipment; mold cycle times of 8 seconds are achieved. The faster the crystallization half-time the faster the potential for fast molding cycles on thermoforming equipment. Crystallization half-times of 130°C correlate very well with achievable thermoforming cycle times.

One of the commonly used parameters for describing the crystallization rate of a polymer is the crystallization half-time, $t_{1/2}$. The crystallization half-time is simply the time at which the crystallization of the originally amorphous sample is half completed according to the method used to monitor crystallinity and may be determined in conventional manners. The half-time is dependent on the crystallization temperature.

Crystallization half-times may be determined by methods well known in the art. One method is by differential scanning calorimetry (DSC), and a Perkin-Elmer DSC-2 differential scanning calorimeter may be used.

The sample is crystallized isothermally in the DSC instrument at a chosen temperature from the glassy state. As the sample crystallizes, the exothermic peak is observed on a chart recorder. The time at which the peak occurs approximates the crystallization half-time for the polymer at that temperature. The experiment is repeated for a number of temperatures to characterize the sample.

Nitrogen at about 20 psig is required as the purge gas for determination of approximate crystallization half-times from the glassy state. Temperature calibration standards used for normal melting point calibrations and are suitable as described in the instrument manual or in ASTM Standard Method D-3418. Indium and lead standards are normally used.

The following procedure is followed:

1. Run a heating scan of the sample at 20°C/min. If a crystallization peak does not appear on the first cycle heating, quench the sample from the melt, and run a second heating cycle.

2. With nitrogen as the purge gas, heat the sample at 320°C/min to 30°C above the melting point. Hold one minute, then quickly remove the sample from the DSC and quench it in such a manner to render the sample amorphous.

3. Allow the DSC to cool at 320°C/min to a temperature at least 30°C below the glass transition temperature.

4. Place the sample in the DSC instrument. Wait one minute. Heat at 320°C/min to 10°C below the crystallization temperature. Turn on the chart and hold isothermally until a peak is obtained or for at least ten minutes.

5. After a peak is obtained, measure the distance in mm from the point at which chart was started to the peak. Divide this distance by the chart speed in mm/min to obtain the approximate half-time in minutes. If desired, the time of chart movement can be measured with a stop watch.

6. Repeat Steps 2 and 3.

7. Repeat Step 4, heating to 5°C below crystallization temperature.

8. Repeat Steps 2, 3, and 4, each time varying isothermal temperature until sufficient data points are obtained.

9. If desired, plot the approximate half-time time in minutes versus crystallization temperature in °C.

Melt temperatures and crystallization temperatures are all corrected. Times to reach exotherm peaks (approximate half-times) are times from when the instrument arrives at the desired crystallization temperature to the occurrence of the peak, i.e.,

$t_p$, min = D/CS

where D is the measured distance in mm on the chart paper from arrival at the desired temperature to the peak, and CS is the chart speed in mm/min.

As used herein, the inherent viscosity (I.V.) is measured at 25°C using 0.50 gram of copolyester per 100 mL of a solvent consisting of 60 percent by weight phenol and 40 percent by weight tetrachloroethane.

Copolyesters may be prepared by techniques well known in the art, for example, as disclosed in U.S. Patent No. 4,010,145. For example, a typical copolyester preparation is as follows: Into a round-bottom, three-necked flask equipped with a stirrer, nitrogen inlet vacuum outlet and condensing flask are weighed 97 grams (0.5 m) of dimethyl terephthalate, 61.07 grams (0.985 m) of ethylene glycol, 2.16 g (0.015 m) of 1,4-cyclohexanedimethanol and 30 ppm titanium catalyst (0.16 mL) of titanium tetraisopropoxide in n-butanol (1.3 weight percent titanium), 48 ppm manganese as a 0.5 weight percent solution of manganese acetate in ethylene glycol, 250 ppm antimony as 1.25 weight percent of antimony trioxide in ethylene glycol, 125 ppm phosphorus as a 0.96 weight percent solution as Zonyl A in ethylene glycol, and 0.045 g of sodium carbonate to give 100 ppm sodium in the polymer. The flask is immersed in a Belmont metal bath at 200°C at atmospheric pressure with stirring and a nitrogen sweep for one hour. The bath temperature is then increased to 210°C, and the flask heated with stirring for an additional hour. The bath temperature is then increased to 280°C and heating and stirring continued for 80 minutes at a reduced pressure of 0.25 mm of mercury. The flask is then removed from the bath and allowed to crystallize under a nitrogen atmosphere. The polymer is removed from the flask and ground to pass a 20-mesh screen. The ground polymer is placed in a 500 mL round-bottom, single-necked flask equipped with a ground-glass head fitted with a stirrer port, nitrogen inlet, and a vacuum outlet. The flask is immersed in a Belmont metal bath and heated at 210°C under a reduced pressure of 0.15 mm of mercury with stirring to solid state polymerize the polymer to an inherent viscosity of 0.90.

Using a differential scanning calorimeter, crystallization on set temperature is determined and crystallization half-time determined isothermally at 130°C. It has been determined that when crystallization half-times at 130°C are one (1) minute or less, very fast mold cycle times can be achieved on thermoforming equipment; mold cycle times of eight seconds or less are achieved. The faster the crystallization half-time, the faster the potential for fast-molding cycles on thermoforming equipment. We have found that crystallization half-times at 130°C correlate very well with achievable thermoforming cycle times.

The poly(ethylene terephthalate) copolymers listed in Table 1 are prepared from dimethyl terephthalate ethylene glycol and the appropriate comonomer using conventional transesterification and polycondenstation catalyst and phosphorus compounds as stabilizers. The polymers are prepared by melt phase polymerization to I.V.'s of 0.62 to 0.68 and then ground to pass a 20-mesh screen and solid state polymerized to I.V.'s of 0.90 to 1.0. The polymers are then extruded into sheet approximately 30 mils thick, and the sheet I.V.'s range from 0.80 to 0.89. Crystallization half-times are determined using Differential Scanning Calorimeter (DSC) technique isothermally at 130°C. This technique has been found to be useful for determining mold cycle time when articles are formed from sheet on commercial thermoforming equipment.

All of the sheets are subjected to bending tests to assess impact resistance. The test consists of cutting amorphous sheets (less than 7% crystallinity) into four-inch squares and heating the sheets in an oven at 204°C for different time intervals, 30, 60, and 90 minutes. During this time the sheets are crystallized. Ten four-inch squares are used for each sample. After heating, each sheet is subjected to five (5) 180° bends. The number of breaks and no breaks are recorded. The following examples are submitted for a better understanding of the invention.

Example 1-11

Unmodified poly(ethylene terephthalate) sheet having an inherent viscosity of 0.89 is compared with poly(ethylene terephthalate) copolymerized with 2 mol % 1,4-cyclohexanedimethanol having an inherent viscosity of 0.88 (Examples 1 and 2) in Table 1. The sheet is heated at 204°C for 30 and 60 minutes prior to testing the impact resistance. The crystallization half-time determined at 130°C shows that the homopolymer has a faster crystallization 1/2 time from the glass than does the copolymer containing 2 mol % 1,4-hexanedimethanol, neither of which crystallize fast enough to be used on a thermoforming machine. The sheet from the copolymer shows considerably improved impact strength when compared to the homopolymer. Examples 3 and 4 (Table 1) show poly(ethylene terephthalate) copolymerized with 2 and 3 mol % 1,4-cyclohexanedimethanol, respectively. The polymers contain .092 and 0.023 weight percent sodium carbonate which is included in the initial reaction mixture. Both polymers show crystallization half-times from the glass of less than one minute at 130°C. Both polymers have good impact resistance after heating at 204°C for 30 and 60 minutes. Examples 5, 6, 7, and 8 show poly(ethylene terephthalate) copolymerized with five different comonomers: diethylene glycol, trans 1,4-cyclohexanedicarboxylate, dimethyl azealate, Carbowax 600 polyethylene glycol (molecular weight of 600) and isophthalic acid, all contain sodium carbonate to enhance nucleation, and all have crystallization half-times from the glass at 130°C of considerably less than

5

one minute. All of the copolymers show excellent impact resistance after 30 minutes aging at 204°C, only the sample (Example 8) shows poor impact after 60 minutes heating at 204°C.

Example 9 shows poly(ethylene terephthalate) copolymerized with 2 mol % isophthalic acid and potassium carbonate instead of sodium carbonate used to enhance nucleation. This copolymer has a crystallization half-time from the glass at 130°C of 35 seconds and shows excellent impact resistance after oven aging at 204°C for 30 and 60 minutes.

Example 10 (Table 1) shows poly(ethylene terephthalate) copolymerized with 2 mol % of 1,4-cyclohexanedimethanol in sheet form which had 0.046 weight percent magnesium carbonate included in the polymer reaction mix. The sheet has an inherent viscosity of 0.81 and a crystallization half-time at 130°C of 40 seconds, and the sheet shows excellent impact resistance after aging at 204°C for 30 and 60 minutes.

Example 11 (Table 1) is a sheet of poly(ethylene terephthalate) copolymerized with 2 mol % of 1,4-cyclohexanedimethanol and contains 0.0365 weight percent sodium bicarbonate having an inherent viscosity of 0.88. The amorphous sheet shows a crystallization half-time of 42 seconds at 130°C and has excellent impact resistance after oven aging at 204°C for 30 and 60 minutes.

The above 11 examples demonstrate that copolymerization with different acid and glycol monomers can be useful to impart improved impact strength and that selected metal salts can be used to enhance crystallization rate and lower the crystallization temperature from the metallic salts in the reaction mixture provide a fast thermoforming material with improved impact resistance.

Example 12

Poly(ethylene terephthalate) copolymerized with 2 mol % 1,4-cyclohexanedimethanol prepared with .0345 weight percent sodium carbonate added to the polymer reaction mixture is extruded into sheet and formed into trays using a conventional thermoformer. The sheet has an inherent viscosity of 0.95 as a comparison poly(ethylene terephthalate) containing 0.0230 weight percent sodium carbonate which has been included in the reaction mixture was extruded into sheet (Example 13, Table 2), and formed into trays using a conventional thermoformer. Autographic impact test, percent crystallinity, mold temperatures, and mold cycle times for the two polymers are shown. After oven aging at 400°F for 30 minutes are shown in Table 2.

The data in Table 2 confirm that poly(ethylene terephthalate) copolymers prepared with metal salts included in the reaction mixture have better impact properties and fast mold cycle times when thermoformed. This data also substantiates the laboratory sheet data in which the sheet bending test is used to simulate impact data on trays and where crystallization half-times are used to predict mold cycle times.

TABLE I

| Ex. | Comonomer | Additive | Additive Concentration Wt % | Sheet I.V. | Crystallization on Set, °C | Bending Impact, Breaks/Bends | | Half-Time Crystallization Sec |
|---|---|---|---|---|---|---|---|---|
| | | | | | | 30 min | 60 min | |
| 1 | 0 | 0 | 0 | 0.89 | 154 | 9/10 | 10/10 | 144 |
| 2 | 2 mol % 1,4-cyclohexanedmethanol | 0 | 0 | 0.88 | 149 | 0/10 | 0/10 | 216 |
| 3 | 2 mol % 1,4-cyclohexanedimethanol | Na₂CO₃ | .092 | 0.87 | 138 | 0/10 | 0/10 | 24 |
| 4 | 3 mol % 1,4-cyclohexanedimethanol | Na₂CO₃ | .023 | 0.84 | 141 | 0/10 | 0/10 | 26 |
| 5 | 3 mol % diethylene glycol | Na₂CO₃ | .023 | 0.87 | 138 | 0/10 | 1/10 | 28 |
| 6 | 5 mol % (trans) 1,4-cyclohexanedicarboxylate | Na₂CO₃ | 0.046 | 0.91 | 141 | 0/10 | 1/10 | 30 |
| 7 | 2 mol % dimethylazealate | Na₂CO₃ | 0.046 | 0.90 | 133 | 0/10 | 0/10 | 30 |
| 8 | 3 mol % Carbowax 600 | Na₂CO₃ | 0.023 | 0.87 | 142 | 0/10 | 5/10 | 30 |
| 9 | 2 mol % isophthalic acid | K₂CO₃ | 0.0345 | 0.90 | 138 | 0/10 | 1/10 | 35 |
| 10 | 2 mol % 1,4-cyclohexanedimethanol | MgCO₃ | 0.046 | 0.81 | 138 | 0/10 | 1/10 | 40 |
| 11 | 2 mol % 1,4-cyclohexanedimethanol | NaHCO₃ | .0365 | 0.88 | 141 | 0/10 | 0/10 | 42 |

TABLE II

| Ex. | Comonomer | Additive | Wt % Additive Concentration | Sheet I.V. | Density/Crystallinity % | ASTM D3763 Autographic Impact/72 F | °C Mold Temperature |
|---|---|---|---|---|---|---|---|
| 12 | 1,4-cyclohexanedimethanol | Na₂CO₃ | .0345 | 0.95 | 1.377/37.0 | 2.96/6P 1B | 160 |
| 13 | 0 | Na₂CO₃ | 0.0230 | 0.93 | 1.381/40.4 | 1.80/10B | 160 |

Measurements were made on the flat bottom part of the tray.

Samples were aged in forced air oven at 400°F for 30 minutes.

P = Puncture Failure

B = Brittle Failure

Unless otherwise specified, all parts, percentages, ratios, etc., are by weight.

The invention has been described in detail with particular reference to preferred embodiments thereof, but it will be understood that variations and modifications can be effected within the spirit and scope of the invention.

**EP 0 356 343 A1**

**Claims**

1. The method of producing a copolyester having a rapid rate of crystallization from the glassy state characterized by the steps of

A) preparing a mixture comprising (1) terephthalic acid or an ester thereof, (2) ethylene glycol, (3) 0.5 to 10 mol % of at least one compound selected from dicarboxylic acids other than terephthalic having 2-12 carbon atoms and aliphatic glycols other than ethylene glycol and diethylene glycol having 2-10 carbon atoms and (4) an alkali or alkaline earth metal salt of a mineral acid or monofunctional aliphatic acid of 1 to 5 carbon atoms,

B) subjecting the mixture prepared in step A) to polymerization conditions, and

C) recovering a product comprising a copolyester having dispersed therein a compound of the metal of said metal salt in sufficient amount to provide 25-5,000 ppm of the elemental metal portion of said compound in the copolyester.

2. The method of Claim 1 wherein the metal in said metal salt is selected from sodium, potassium, lithium, and magnesium.

3. The method of Claim 2 wherein said metal is sodium.

4. The method of Claim 1 wherein said mineral or monofuctional acid is selected from carbonic, acetic, oxalic, tartaric, and pivalic.

5. The method of Claim 4 wherein said acid is carbonic or acetic.

6. The method of Claim 1 wherein said metal salt is present in sufficient amount to provide elemental metal in the copolyester in an amount of 25 to 5,000 ppm.

7. A sheet of material capable of being thermoformed into a thin-walled article having a crystallinity of at least 20% after thermoforming, said sheet having a crystallization half-time at 130°C of less than 1 minute from the glassy state, said sheet characterized as a copolymer of polyethylene terephthalate modified with 0.5 to 10 mol % of at least one compound selected from dicarboxylic acids other than terephthalic having 2-12 carbon atoms and aliphatic glycols other than ethylene glycol and diethylene glycol having 2-10 carbon atoms, said copolyester having an I.V. of 0.60-1.0, and a crystallization aid comprising an alkali or alkaline earth metal compound in sufficient amount to provide 25-5,000 ppm of the elemental metal portion of said compound in the copolyester.

8. The sheet of Claim 7 wherein the metal in said metal compound is selected from sodium, potassium, lithium, and magnesium.

9. The sheet of Claim 8 wherein said metal is sodium.

10. The sheet of Claim 7 wherein said metal compound is present in sufficient amount to provide elemental metal in said copolyester in an amount of 50 to 500 ppm.

11. A shaped, thin-walled, article thermoformed from the sheet of Claim 7.

12. A shaped, thin-walled, article thermoformed from the sheet of Claim 8.

13. A shaped, thin-walled, article thermoformed from the sheet of Claim 9.

14. A shaped, thin-walled, article thermoformed from the sheet of Claim 10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 921 051 (L.E. AMBORSKI et al.) <br> * Claims 1-9 * | 1-14 | C 08 G 63/18 <br> C 08 K 3/24 <br> C 08 K 5/09 <br> C 08 L 67/02 <br> C 08 J 5/18 |
| X | US-A-4 008 207 (OMOTO et al.) <br> * Claims 1-4; column 3, line 49 - column 4, line 3; examples 1-3 * | 1-14 | |
| X | EP-A-0 215 364 (HOECHST) <br> * Claims 1-9 * | 1-6 | |
| X | US-A-3 567 693 (A. PIIRMA) <br> * Claims 1-5; column 3, lines 1-63 * | 1-14 | |
| A | EP-A-0 152 265 (TOYO BOSEKI K.K.) <br> * Claims 1-8 * | 1-14 | |
| A | EP-A-0 083 746 (TOYO BOSEKI K.K.) <br> * Claims 1,6-8,10,13 * | 1-14 | |
| A | EP-A-0 186 456 (POLYPLASTICS) <br> * Claims 1-6 * | 1-6 | TECHNICAL FIELDS SEARCHED (Int. Cl.5) |
| A | GB-A-2 150 580 (DART IND. INC.) <br> * Claims 1-12 * | 1-6 | C 08 K <br> C 08 J <br> C 08 L |

The present search report has been drawn up for all claims

| Place of search | Date of completion of the search | Examiner |
|---|---|---|
| THE HAGUE | 30-11-1989 | DECOCKER L. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                       

& : member of the same patent family, corresponding
document

EPO FORM 1503 03.82 (P0401)